# FASCICULE DE BREVET EUROPEEN

(11) **EP 1 390 819 B1**
(45) Date de publication et mention de la délivrance du brevet: **14.06.2006**
(21) Numéro de dépôt: 02738226.6
(22) Date de dépôt: 07.05.2002
(51) Int. Cl.: G05B 19/05

(54) **SYSTEME DE DIAGNOSTIC PREDICTIF DANS UN AUTOMATE PROGRAMMABLE**
SYSTEM ZUR VORSEHBAREN DIAGNOSE IN EINER SPEICHER PROGRAMMIERBAREN STEUERUNG
PREDICTIVE DIAGNOSTIC SYSTEM IN A PROGRAMMABLE AUTOMATION

(30) Priorité: 16.05.2001 FR 0106682
(43) Date de publication de la demande: 25.02.2004
(73) Titulaire: Schneider Automation, 06560 Valbonne (FR)
(72) Inventeur: ROUSSEAU, Robert, F-06600 Antibes (FR); BONNARD, François, Raleigh, NC 27512 (US); LAFUITE, Alain, F-06100 Nice (FR)
(86) Numéro de dépôt international: PCT/FR2002/001577
(87) Numéro de publication internationale: WO 2002/093277

(56) Documents cités:
- EP-A- 0 292 914
- EP-A- 0 424 869
- EP-A- 0 572 767
- US-A- 5 410 495
- US-A- 5 926 621

## Description

La présente invention concerne un système de diagnostic réalisé à partir de l'observation d'un ou de plusieurs signaux issus d'un process à surveiller. Ce système de diagnostic est implanté dans un automate programmable et peut s'appliquer à tout ensemble d'automatisme comportant un automate programmable destiné à piloter ou surveiller un process dans le domaine des automatismes industriels, des automatismes du bâtiment ou du contrôle/commande des réseaux électriques de distribution. L'invention concerne également un procédé de diagnostic mis en oeuvre dans un tel système de diagnostic.

Les process automatisés sont généralement pilotés et surveillés par des automates programmables dont le rôle est notamment de faire l'acquisition d'informations issues du process (signaux d'entrées), d'exécuter un programme application (appelé aussi programme utilisateur) en utilisant ces informations de façon à délivrer des ordres et commandes en direction du process (signaux de sorties). Désormais, pour une meilleure surveillance de tels process automatisés, on demande souvent des systèmes capables de faire du diagnostic notamment du diagnostic prédictif, c'est-à-dire capables d'anticiper l'apparition d'une défaillance ou d'un défaut. Ces systèmes permettent en effet d'une part de faciliter la planification et l'optimisation des opérations de maintenance et d'autre part de minimiser les risques d'arrêts ou d'incidents pour le process, contribuant ainsi à la sécurité et à l'efficacité de l'automatisme.

Le document EP-A-0 292 914 décrit un système de diagnostic réalisé à partir d'une information observée provenant d'un procès, le système comprenant un automate programmable doté d'une unité de traitement pour exécuter un programme application destiné à surveiller et piloter ledit procès et mémorisé dans des moyens de mémorisation de l'automate programmable.

Cependant, un diagnostic prédictif fiable est souvent lourd à réaliser car il peut nécessiter une sélection délicate parmi les nombreux paramètres du process à surveiller ainsi qu'une utilisation d'algorithmes complexes nécessaires pour modéliser le process de façon satisfaisante. Cette modélisation fait alors appel à des moyens informatiques importants qui sont difficilement intégrables dans des automates programmables, tant du point de vue de leur puissance de traitement que de leur capacité mémoire. Par ailleurs, les langages informatiques qui sont généralement employés pour mettre en oeuvre ces algorithmes, sont très différents des langages habituels utilisés dans les programmes application des automatismes, comme ceux répondant à la norme IEC1131-3.

L'invention a donc pour but de concevoir un système de diagnostic qui soit facilement incorporable dans un automate programmable. De plus, le système vise à faire du diagnostic prédictif sur un process non modélisable mathématiquement. Pour cela, le résultat du diagnostic sera lié à l'observation d'un ou plusieurs signaux simples du process, sur lesquels sera effectué un apprentissage et sur lesquels on cherchera à reconnaître des évolutions permettant de prévoir l'apparition d'un événement ou d'un défaut du process. En fonction des signaux observés et des échantillons sélectionnés, un tel système sera également capable d'évaluer une probabilité de présence d'un défaut entre par exemple une valeur minimale correspondant à un fonctionnement normal du process surveillé et une valeur maximale correspondant à un défaut avéré dans le process surveillé.

La partie nécessaire à l'observation et à la détection est nécessairement embarquée dans l'automate programmable. La partie apprentissage, qui utilisera un algorithme de détection déterminé sur la base de données observées, pourra aussi être embarquée dans l'automate programmable si celui-ci dispose des capacités suffisantes, mais pourra aussi être embarquée dans un équipement informatique différent apte à communiquer avec l'automate programmable afin de ne pas surcharger l'unité de traitement ou la mémoire de l'automate programmable. Dans ce cas, la partie apprentissage s'interfacerait avec l'opérateur par des moyens de dialogue connectés à l'automate.

Pour cela, l'invention décrit un système de diagnostic réalisé à partir d'une information observée provenant d'un process surveillé par un automate programmable. Celui-ci est doté d'au moins une unité de traitement pour exécuter un programme application mémorisé dans des moyens de mémorisation de l'automate programmable. Le système de diagnostic se caractérise par le fait qu'il comporte :
- un module d'observation mémorisé dans lesdits moyens de mémorisation et exécuté par l'unité de traitement de l'automate programmable, recueillant en entrée l'information observée pour lui appliquer un traitement d'observation en vue de délivrer en sortie une information traitée, représentative de l'information observée,
- un module d'apprentissage élaborant une fonction de diagnostic à partir d'une pluralité d'informations traitées reçues du module d'observation pendant une période de temps déterminée,
- un module de détection, mémorisé dans lesdits moyens de mémorisation et exécuté par l'unité de traitement de l'automate programmable, recueillant en entrée l'information observée pour lui appliquer un traitement de détection comprenant la fonction de diagnostic issue du module d'apprentissage, afin de délivrer en sortie un résultat de diagnostic.

L'information observée comprend un ou plusieurs signaux analogiques et/ou digitaux fournis par des moyens de détection raccordés à l'automate programmable.

Le système de diagnostic selon l'invention comporte également, dans les moyens de mémorisation, un module de détection exécuté par l'unité de traitement de l'automate programmable, recueillant en entrée l'information observée pour lui appliquer un traitement de détection comprenant une fonction de diagnostic issue du module d'apprentissage, afin de délivrer en sortie un résultat de diagnostic.

Le module d'observation et le module de détection sont intégrés dans le programme application sous la forme d'un ou de plusieurs blocs fonctions au sens de la norme IEC1131-3. Ces blocs fonctions peuvent être eux-mêmes écrits dans un des langages définis par la norme IEC1131-3, ou dans un autre langage, par exemple en langage C.

L'invention décrit aussi un procédé de diagnostic prédictif mis en oeuvre par un tel système de diagnostic. Le procédé comporte une étape d'observation dans laquelle le module d'observation effectue la lecture de l'information observée, lui applique un traitement d'observation et transmet au module d'apprentissage une information traitée, une étape d'apprentissage dans laquelle le module d'apprentissage élabore une fonction de diagnostic à partir des informations traitées, une étape de chargement dans laquelle le module d'apprentissage transfère dans le module de détection la fonction de diagnostic élaborée, une étape d'exploitation dans laquelle le module de détection effectue la lecture de l'information observée, lui applique un traitement de détection comprenant la fonction de diagnostic et délivre en sortie un résultat de diagnostic.

D'autres caractéristiques et avantages vont apparaître dans la description détaillée qui suit en se référant à un mode de réalisation donné à titre d'exemple et représenté par les dessins annexés sur lesquels :
- la figure 1 représente un schéma fonctionnel du système de diagnostic selon l'invention,
- la figure 2 montre les étapes du procédé de diagnostic mis en oeuvre dans l'invention,
- la figure 3 détaille l'étape de simulation du procédé de diagnostic.

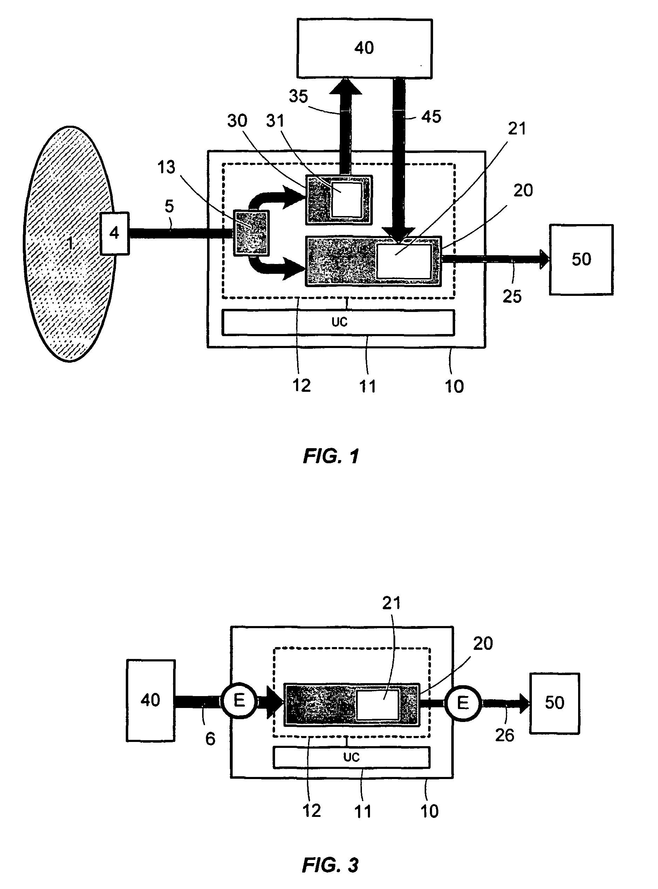

En référence à la figure 1, un automate programmable 10 comporte de façon connue au moins une unité de traitement 11 susceptible d'exécuter un programme application (ou programme utilisateur) mémorisé dans des moyens de mémorisation 12 de l'automate programmable 10. Ce programme application a notamment pour fonction de piloter et de surveiller un process 1, par exemple appartenant au domaine des automatismes industriels, des automatismes du bâtiment ou au contrôle/commande des réseaux électriques de distribution. L'automate programmable 10 comprend un ou plusieurs coupleurs d'entrées/sorties, non représentés sur la figure 1, d'une part pour faire l'acquisition d'informations d'entrée (par exemple de type Tout ou Rien, analogique ou de comptage) en provenance de capteurs du process 1 et d'autre part pour délivrer des ordres et commandes de sortie en direction de préactionneurs et actionneurs du process 1.

L'automate programmable 10 peut aussi être équipé de coupleurs ou d'autres moyens de communication permettant de le raccorder à tout équipement tiers tel qu'un terminal de dialogue ou un réseau ou un équipement informatique.

Les moyens de mémorisation 12 sont constitués par de la mémoire volatile et non volatile, par exemple de la mémoire RAM, de la mémoire FLASH ou de la mémoire REPROM ou par tout autre moyen de mémorisation tel que des cartes PCMCIA.

Le programme application d'un automate programmable 10 est généralement écrit dans un ou plusieurs langages d'automatisme lesquels intègrent en particulier des schémas à contacts (Ladder Diagram), des schémas séquentiels (Sequential Function Chart), des blocs fonctions (Function Block) ou du langage textuel. Ces langages d'automatisme sont avantageusement conformes à la norme IEC1131-3, de façon à faciliter la programmation par un concepteur automaticien ne maîtrisant pas forcément les langages informatiques.

Le système de diagnostic décrit dans la présente invention comporte un module d'observation 30 qui est exécuté par l'unité de traitement 11 de l'automate programmable 10. Ce module d'observation 30 est mémorisé dans les moyens de mémorisation 12. Il peut se présenter sous la forme d'un ou plusieurs blocs fonctions au sens de la norme IEC1131-3, de façon à être avantageusement intégré dans le programme application de l'automate programmable 10. Le module d'observation 30 recueille en entrée une information observée 5, issue du process 1 à surveiller, par l'intermédiaire de coupleur(s) d'entrées de l'automate programmable 10. L'information observée 5 comprend préférentiellement un ou plusieurs signaux analogiques et/ou digitaux, fournis par des moyens de détection 4 destinés à la surveillance du process 1. Ces moyens de détection 4 peuvent être constitués par un ou plusieurs capteurs raccordés à l'automate programmable 10 et chargés de faire des acquisitions de mesures ou d'états relatifs au process 1.

L'information observée 5 fait généralement l'objet d'un traitement préliminaire 13, de façon à effectuer un filtrage, un étalonnage, une mise à l'échelle ou autre sur cette information brute. Le traitement préliminaire peut être effectué par du matériel intégré ou non à l'automate programmable 10 ou par des moyens logiciels 13 mémorisés dans les moyens de mémorisation 12, comme il est indiqué dans l'exemple de la figure 1. L'information observée 5 issue de ce traitement préliminaire 13 est ensuite envoyée au module d'observation 30 ainsi qu'au module de détection 20.

Le module d'observation 30 comprend un traitement d'observation 31 qui est appliqué à l'information observée 5 en vue de fournir en sortie du module d'observation 30 une information traitée 35 représentative de l'information observée 5. En fonction du type d'application, le traitement d'observation 31 peut inclure notamment une fonction de datation d'événements pour adjoindre un horodatage précis à l'information observée 5 ou une fonction de mise en forme exploitable des données.

L'information traitée 35 est envoyée à destination d'un module apprentissage 40 qui la mémorise. Selon une première variante de l'invention représentée en figure 1, le module apprentissage 40 est exécuté dans un équipement distinct de l'automate programmable 10, par exemple dans un équipement informatique de type PC. Cet équipement informatique doit alors être capable de communiquer avec l'automate programmable 10, par l'intermédiaire d'un coupleur ou d'un autre moyen de communication de l'automate programmable 10.

Selon une seconde variante équivalente non représentée sur les figures, il est également possible d'embarquer le module apprentissage 40 dans l'automate programmable 10. Le module apprentissage 40 est alors intégré par exemple dans l'unité centrale de l'automate programmable, dans un coupleur métier ou dans un coprocesseur spécifique de l'automate programmable 10, doté d'une unité de traitement et de moyens de mémorisation propres et d'une interface de dialogue opérateur, la communication entre le coupleur métier et l'automate programmable se faisant alors par le bus fond de panier de l'automate. Le choix entre l'une ou l'autre variante se fera notamment en fonction de la puissance de l'automate programmable 10 et de sa capacité à recevoir un module apprentissage 40.

Le module apprentissage 40 effectue une mémorisation des données fournies par les informations traitées 35 reçues. Un opérateur a alors la possibilité de visualiser les données ainsi mémorisées grâce à une interface de dialogue opérateur adaptée. L'opérateur sélectionne des séquences de données qu'il estime être en relation avec le diagnostic recherché, pour construire un échantillon de référence.

Le diagnostic recherché peut indifféremment être soit la détection d'un fonctionnement anormal au niveau du process à surveiller, soit un calcul de probabilité d'un fonctionnement normal, soit et de manière préférentielle la détection d'une future apparition d'événement(s) ou de défaut(s), éventuellement triés par types, fournissant ainsi un diagnostic prédictif du process. Le nombre de séquences de données à sélectionner est dépendant du diagnostic recherché et du type d'algorithme mis en oeuvre pour la détection dans le module apprentissage. L'information traitée 35 peut être ainsi observée en continu ou pendant une ou plusieurs périodes de temps déterminées (appelées fenêtres temporelles d'observation) qui dépendent du process observé et qui sont choisies par l'utilisateur comme un paramètre du module d'observation 30.

Quand l'échantillon est jugé satisfaisant par rapport au process à surveiller et à l'algorithme utilisé pour la détection, l'opérateur demande le calcul par le module apprentissage 40 d'une fonction de diagnostic 45, laquelle sera ensuite transférée dans les moyens de mémorisation 12 de l'automate programmable 10. L'algorithme mis en oeuvre dans le module apprentissage 40 pour élaborer la fonction de diagnostic 45 est un algorithme de type apprentissage numérique, c'est-à-dire qui utilise des données numériques préalablement observées. Cet algorithme peut être sélectionné parmi une bibliothèque de plusieurs algorithmes accessibles au module apprentissage 40. Par exemple, l'algorithme choisi intègre une technologie basée sur des réseaux neuronaux ou une technologie basée sur de la logique floue. Le nombre d'échantillons nécessaires, le mode de calcul, le process de validation de la fonction de diagnostic, dépendent de la technologie de l'algorithme choisi. Le calcul de la fonction de diagnostic 45 peut nécessiter des moyens informatiques importants qui ne sont pas forcément compatibles avec les moyens d'un automate programmable 10. Un des avantages de l'invention est donc de permettre à un automate programmable simple de faire un diagnostic prédictif mettant en oeuvre un algorithme éventuellement complexe, sans avoir nécessairement les contraintes engendrées par le calcul et la mise au point de la fonction de diagnostic dans l'unité de traitement 11. Un autre avantage de l'invention est de donner la possibilité d'utiliser des logiciels à apprentissage existants et disponibles sur des équipements informatiques de type PC, en fonction de la technologie de l'algorithme choisi, pour générer la fonction de diagnostic 45.

Le système de diagnostic comporte également un module de détection 20 qui est exécuté par l'unité de traitement 11. Ce module de détection 20 est mémorisé dans les moyens de mémorisation 12. Il peut se présenter sous la forme d'un ou plusieurs blocs fonctions au sens de la norme IEC1131-3, de façon à être avantageusement intégré dans le programme application de l'automate programmable 10. De façon équivalente, le module de détection 20 pourrait aussi être intégré avec le module d'observation 30 dans un même bloc fonction. Le rôle du module de détection 20 est de lire l'information observée 5 issue du process 1, de lui appliquer un traitement de détection 21 de façon à délivrer en sortie un résultat de diagnostic 25. Le traitement de détection 21 inclut la fonction de diagnostic 45 élaborée et chargée à partir du module apprentissage 40 dans les moyens de mémorisation 12. La mémorisation de la fonction de diagnostic 45 peut se faire sous plusieurs formes, par exemple celle d'une fonction compilée pour s'exécuter sur l'automate, ou sous la forme de termes d'une fonction polynomiale incluse dans le traitement de détection 21.

Le résultat de diagnostic 25 est transmis à un module d'exploitation du résultat 50 et peut se présenter sous la forme d'un message, d'une valeur déterminée donnée à une ou plusieurs variable(s), ou sous une autre forme utilisable par le module d'exploitation du résultat 50. Celui-ci est susceptible de faire une action prédéfinie à la réception du résultat de diagnostic. Comme action prédéfinie, on peut prévoir la signalisation d'une alarme, l'élaboration d'une commande, l'envoi d'un message, etc... Le module d'exploitation du résultat 50 se situe indifféremment à l'extérieur ou à l'intérieur de l'automate programmable 10.

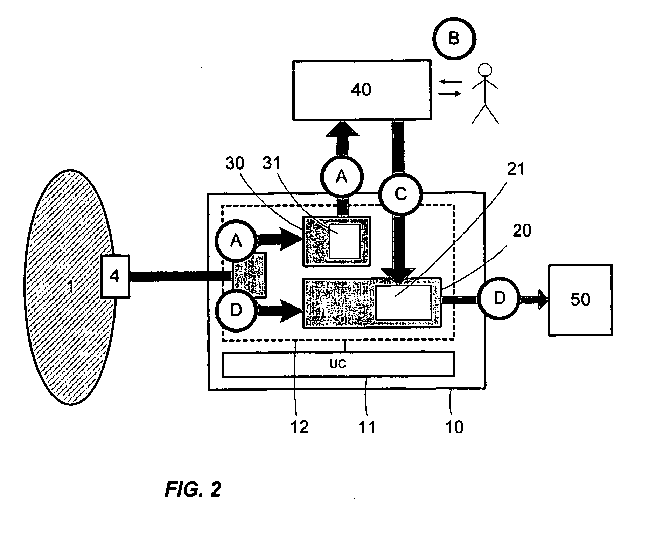

En référence à la figure 2, le système de diagnostic ainsi décrit met en oeuvre un procédé de diagnostic prédictif qui comporte les étapes suivantes.
- Une étape d'observation A dans laquelle le module d'observation 30 effectue la lecture de l'information observée 5 nécessaire pour pouvoir réaliser le diagnostic souhaité sur le process 1. Généralement, la lecture physique d'une information 5 provenant du process 1 est effectuée par un coupleur d'entrées/sorties qui inscrit la valeur mesurée dans une mémoire vive d'entrées/sorties de l'automate programmable 10. Dans ce cas, le module d'observation 30 vient lire le contenu de cette mémoire d'entrées/sorties. L'information observée 5 est constituée par un ou plusieurs signaux dont on estime que l'évolution est susceptible de permettre le diagnostic souhaité. Le module d'observation 30 applique à cette information observée 5 le traitement d'observation 31 pour transmettre au module apprentissage 40 une information traitée 35.
- Une étape d'apprentissage B dans laquelle le module apprentissage 40 élabore une fonction de diagnostic 45 à partir d'une pluralité d'informations traitées 35 mémorisées dans le module apprentissage 40 en utilisant un algorithme de détection sélectionné. Durant cette étape, l'assistance d'un opérateur est nécessaire pour choisir les bonnes informations traitées à prendre en compte pour le diagnostic souhaité.
- Une étape de chargement C dans laquelle la fonction de diagnostic 45 élaborée par le module apprentissage 40 est transférée dans les moyens de mémorisation 12 de l'automate programmable 10 et est intégrée dans le module de détection 20 de façon à pouvoir être exécutée par l'unité de traitement 11.
- Une étape d'exploitation D dans laquelle le module de détection 20 effectue la lecture de l'information observée 5, via la mémoire d'entrées/sorties. Un traitement de détection 21 comprenant la fonction de diagnostic 45 est appliquée à cette information observée 5 de façon à délivrer en sortie un résultat de diagnostic 25 au module d'exploitation du résultat 50. Cette étape d'exploitation D correspond au fonctionnement opérationnel du système de diagnostic.

Le procédé comporte également une étape de simulation E, indiquée à la figure 3, permettant de tester l'exécution du module de détection 20 de l'automate programmable 10 en particulier lors de phases de mises au point. Durant cette étape E, le module apprentissage 40 envoie au module de détection 20 un échantillon de test 6, cet échantillon 6 remplaçant l'information observée 5 issue du process 1 et étant généralement choisi par l'opérateur. Le traitement de diagnostic 21 est appliqué à cet échantillon de test 6 en vue de délivrer un résultat de test du diagnostic 26 qui est ensuite analysé. Il est donc possible de simuler des situations particulières qui pourraient survenir au niveau du process 1, d'étudier le comportement du module de détection 20 dans ces cas précis, sans perturber le fonctionnement du process, facilitant ainsi énormément la mise au point du système de diagnostic.

Grâce à un mode de fonctionnement préférentiel, les modules d'observation 30 et de détection 20 peuvent être exécutés en parallèle par l'unité de traitement 11, ces deux modules ayant accès aux mêmes informations observées 5 lues dans la mémoire d'entrées/sorties après le traitement préliminaire 13, et à condition qu'une première fonction de diagnostic 45 ait déjà été chargée dans le module de détection 20. Ainsi, pendant que le système de diagnostic est dans un fonctionnement opérationnel, le module apprentissage 40 peut continuer à recevoir des informations traitées 35 de façon à ce qu'un opérateur puisse continuer à affiner la fonction de diagnostic ou à trouver de nouvelles séquences de données en relation avec un diagnostic recherché. Ceci procure une importante souplesse d'utilisation à l'invention décrite donnant ainsi à l'opérateur une grande facilité pour utiliser mais surtout pour améliorer et affiner le système de diagnostic même lorsque celui-ci est opérationnel, sans perturber l'exploitation du process automatisé. L'étape d'observation A et l'étape d'apprentissage B peuvent être permanentes ou encadrées dans des fenêtres temporelles d'observation configurées par l'opérateur au niveau du module apprentissage 40.

Selon une variante, les modules d'observation 30 et de détection 20 sont intégrables dans un coupleur métier de l'automate programmable 10, muni d'une unité de traitement propre, de moyens de mémorisation propres et d'un accès à la mémoire d'entrées/sorties de l'automate programmable. Ce coupleur métier étant capable d'exécuter les modules d'observation 30 et de détection 20, cela permet alors de décharger l'unité de traitement 11 de l'automate programmable 10.

## Revendications

1. Système de diagnostic réalisé à partir d'une information observée (5) provenant d'un process (1), le système comprenant un automate programmable (10) doté d'une unité de traitement (11) pour exécuter un programme application destiné à surveiller et piloter ledit process (1) et mémorisé dans des moyens de mémorisation (12) de l'automate programmable (10), **caractérisé par le fait que** le système de diagnostic comporte :
• un module d'observation (30), mémorisé dans lesdits moyens de mémorisation (12) et exécuté par l'unité de traitement (11), recueillant en entrée l'information observée (5) pour lui appliquer un traitement d'observation (31) en vue de délivrer en sortie une information traitée (35), représentative de l'information observée (5),
• un module d'apprentissage (40) élaborant une fonction de diagnostic (45) à partir d'une pluralité d'informations traitées (35) reçues du module d'observation (30) pendant une période de temps déterminée,
• un module de détection (20), mémorisé dans lesdits moyens de mémorisation (12) et exécuté par l'unité de traitement (11) en parallèle du module d'observation (30), recueillant en entrée l'information observée (5) pour lui appliquer un traitement de détection (21) comprenant la fonction de diagnostic (45) issue du module d'apprentissage (40), afin de délivrer en sortie un résultat de diagnostic (25).

2. Système de diagnostic selon la revendication 1, **caractérisé par le fait que** l'information observée (5) comprend un ou plusieurs signaux analogiques et/ou digitaux fournis par des moyens de détection (4) raccordés à l'automate programmable (10).

3. Système de diagnostic selon la revendication 1, dans lequel le programme application de l'automate programmable (10) est écrit dans un ou plusieurs langages conformes à la norme IEC1131-3, **caractérisé par le fait que** le module d'observation (30) et le module de détection (20) sont intégrés dans le programme application sous la forme d'un ou de plusieurs blocs fonctions au sens de la norme IEC1131-3.

4. Système de diagnostic selon la revendication 3, **caractérisé par le fait que** le module apprentissage (40) est exécuté dans un équipement informatique distinct de l'automate programmable (10), apte à communiquer avec l'automate programmable (10).

5. Système de diagnostic selon la revendication 3, **caractérisé par le fait que** le module apprentissage (40) est embarqué dans l'automate programmable (10).

6. Système de diagnostic selon la revendication 3, **caractérisé par le fait que** le traitement d'observation (31) comporte une fonction de datation d'événements.

7. Système de diagnostic selon la revendication 3, **caractérisé par le fait que** le module apprentissage (40) élabore la fonction de diagnostic (45) en utilisant un algorithme basé sur des réseaux neuronaux.

8. Système de diagnostic selon la revendication 3, **caractérisé par le fait que** le module apprentissage (40) élabore la fonction de diagnostic (45) en utilisant un algorithme basé sur de la logique floue.

9. Procédé de diagnostic prédictif mis en oeuvre par un système de diagnostic selon l'une des revendications précédentes, **caractérisé par le fait que** le procédé comporte :
• Une étape d'observation (A) dans laquelle le module d'observation (30) effectue la lecture de l'information observée (5), lui applique un traitement d'observation (31) et transmet au module d'apprentissage (40) une information traitée (35), représentative de l'information observée (5),
• Une étape d'apprentissage (B) dans laquelle le module d'apprentissage (40) élabore une fonction de diagnostic (45) à partir d'une pluralité d'informations traitées (35),
• Une étape de chargement (C) dans laquelle le module d'apprentissage (40) transfère la fonction de diagnostic élaborée (45) dans le module de détection (20),
• Une étape d'exploitation (D) dans laquelle le module de détection (20) effectue la lecture de l'information observée (5), lui applique un traitement de détection (21) comprenant la fonction de diagnostic (45) et délivre en sortie un résultat de diagnostic (25), l'étape d'observation (A) et l'étape d'exploitation (D) s'exécutant en parallèle dans l'unité de traitement (11) de l'automate programmable (10).

10. Procédé de diagnostic prédictif selon la revendication 9, **caractérisé par le fait que** le procédé comprend également une étape de simulation (E) dans laquelle le module de détection (20) reçoit en entrée un échantillon de test (6) provenant du module d'apprentissage (40), applique à cet échantillon de test (6) le traitement de détection (21) et délivre en sortie un résultat de test du diagnostic (26).

## Claims

1. Diagnostic system made from observed information (5) from a process (1), the system comprising a programmable logic controller (10) provided with a processing unit (11) to run an application program stored in storage means (12) of the programmable logic controller (10) in order to monitor and control said process (1), **characterised in that** the diagnostic system comprises :
• an observation module (30), stored in said storage means (12) and run by the processing unit (11), collecting the observed information (5) as input, to apply an observation processing (31) to the observed information (5), in order to output a processed information (35) representative of the observed information (5),
• a learning module (40) generating a diagnostic function (45) from several items of processed information (35) received from the observation module (30) during a determined time period,
• a detection module (20), stored in said storage means (12) and run by the processing unit (11) in parallel with the observation module (30), collecting the observed information (5) as input, to apply to the observed information (5) a detection processing (21) comprising the diagnostic function (45) derived from the learning module (40), in order to output a diagnostic result (25).

2. Diagnostic system in accordance with claim 1, **characterised in that** the observed information (5) comprises one or several analogue and/or digital signals supplied by the detection means (4) connected to the programmable logic controller (10).

3. Diagnostic system in accordance with claim 1, in which the application program of the programmable logic controller (10) is written in one or several languages conform with standard IEC1131-3, **characterised in that** the observation module (30) and the detection module (20) are integrated in the application program in the form of one or several function blocks as defined for standard IEC1131-3.

4. Diagnostic system in accordance with claim 3, **characterised in that** the learning module (40) is run by a computer equipment separate from the programmable logic controller (10), capable of communicating with the programmable logic controller (10).

5. Diagnostic system in accordance with claim 3, **characterised in that** the learning module (40) is embedded in the programmable logic controller (10).

6. Diagnostic system in accordance with claim 3, **characterised in that** the observation processing (31) includes an event dating function.

7. Diagnostic system in accordance with claim 3, **characterised in that** the learning module (40) generates the diagnostic function (45) by using an algorithm based on neural networks.

8. Diagnostic system in accordance with claim 3, **characterised in that** the learning module (40) generates the diagnostic function (45) by using an algorithm based on fuzzy logic.

9. Predictive diagnostic process used by a diagnostic system in accordance with one of the above claims, **characterised in that** it includes the following steps :
• An observation step (A) in which the observation module (30) reads the observed information (5), applies an observation processing (31) to the observed information (5) and transmits a processed information (35), representative of the observed information (5), to the learning module (40),
• A learning step (B) in which the learning module (40) generates a diagnostic function (45) from several items of processed information (35),
• A loading step (C) in which the learning module (40) transfers the generated diagnostic function (45) into the detection module (20),
• An interpretation step (D) in which the detection module (20) reads the observed information (5), applies a detection processing (21) to the observed information (5), comprising the diagnostic function (45), and outputs a diagnostic result (25), the observation step (A) and the interpretation step (D) running in parallel in the processing unit (11) of the programmable logic controller (10).

10. Predictive diagnostic process in accordance with claim 9, **characterised in that** it also comprises a simulation step (E) in which the detection module (20) receives as input a test sample (6) from the learning module (40), applies the detection processing (21) to the test sample (6) and outputs a diagnostic test result (26).

## Patentansprüche

1. Diagnosesystem, das ausgehend von einer von einem Prozess (1) kommenden beobachteten Information (5) durchgeführt wird, wobei das System ein mit einer Verarbeitungseinheit (11) versehenes speicherprogrammierbares Automatisierungsgerät (10) aufweist, um ein Anwendungsprogramm auszuführen, das dazu bestimmt ist, den Prozess (1) zu überwachen und zu steuern und das in Speichermitteln (12) des speicherprogrammierbaren Automatisierungsgeräts (10) gespeichert ist, **dadurch gekennzeichnet, dass** es aufweist:
• einen in den Speichermitteln (12) gespeicherten und von der Verarbeitungseinheit (11) ausgeführten Beobachtungsmodul (30), der am Eingang die beobachtete Information (5) empfängt, um an ihr eine Beobachtungsverarbeitung (31) durchzuführen, um am Ausgang eine verarbeitete Information (35) zu liefern, die für die beobachtete Information (5) repräsentativ ist,
• einen Lernmodul (40), der ausgehend von mehreren verarbeiteten Informationen (35), die während eines bestimmten Zeitraums vom Beobachtungsmodul (30) empfangen werden, eine Diagnosefunktion (45) erarbeitet,
• einen Erfassungsmodul (20), der in den Speichermitteln (12) gespeichert ist und durch die Verarbeitungseinheit (11) parallel zum Beobachtungsmodul (30) ausgeführt wird, der am Eingang die beobachtete Information (5) empfängt, um an ihr eine Erfassungsverarbeitung (21) durchzuführen, die die vom Lernmodul (40) stammende Diagnosefunktion (45) enthält, um am Ausgang ein Diagnoseergebnis (25) zu liefern.

2. Diagnosesystem nach Anspruch 1, **dadurch gekennzeichnet, dass** die beobachtete Information (5) ein oder mehrere analoge und/oder digitale Signale enthält, die von Erfassungsmitteln (4) geliefert werden, die an das speicherprogrammierbare Automatisierungsgerät (10) angeschlossen sind.

3. Diagnosesystem nach Anspruch 1, bei dem das Anwendungsprogramm des speicherprogrammierbaren Automatisierungsgeräts (10) in einer oder mehreren Sprachen entsprechend der Norm IEC1131-3 geschrieben ist, **dadurch gekennzeichnet, dass** der Beobachtungsmodul (30) und der Erfassungsmodul (20) in Form eines oder mehrerer Funktionsblöcke im Sinne der Norm IEC1131-3 in das Anwendungsprogramm integriert sind.

4. Diagnosesystem nach Anspruch 3, **dadurch gekennzeichnet, dass** der Lernmodul (40) in einer Datenverarbeitungsanlage ausgeführt wird, die sich vom speicherprogrammierbaren Automatisierungsgerät (10) unterscheidet und in der Lage ist, mit dem speicherprogrammierbaren Automatisierungsgerät (10) zu kommunizieren.

5. Diagnosesystem nach Anspruch 3, **dadurch gekennzeichnet, dass** der Lernmodul (40) in das speicherprogrammierbare Automatisierungsgerät (10) integriert ist.

6. Diagnosesystem nach Anspruch 3, **dadurch gekennzeichnet, dass** die Beobachtungsverarbeitung (31) eine Funktion der Datierung von Ereignissen aufweist.

7. Diagnosesystem nach Anspruch 3, **dadurch gekennzeichnet, dass** der Lernmodul (40) die Diagnosefunktion (45) unter Verwendung eines auf Neuronennetzen basierenden Algorithmus erarbeitet.

8. Diagnosesystem nach Anspruch 3, **dadurch gekennzeichnet, dass** der Lernmodul (40) die Diagnosefunktion (45) unter Verwendung eines auf einer Fuzzy-Logik basierenden Algorithmus erarbeitet.

9. Vorausschauendes Diagnoseverfahren, das von einem Diagnosesystem nach einem der vorhergehenden Ansprüche angewendet wird, **dadurch gekennzeichnet, dass** das Verfahren aufweist:
• einen Beobachtungsschritt (A), in dem der Beobachtungsmodul (30) die beobachtete Information (5) liest, an ihr eine Beobachtungsverarbeitung (31) durchführt und an den Lernmodul (40) eine verarbeitete Information (35) überträgt, die für die beobachtete Information (5) repräsentativ ist,
• einen Lernschritt (B), in dem der Lernmodul (40) ausgehend von mehreren verarbeiteten Informationen (35) eine Diagnosefunktion (45) erarbeitet,
• einen Ladeschritt (C), in dem der Lernmodul (40) die erarbeitete Diagnosefunktion (45) in den Erfassungsmodul (20) überträgt,
• einen Nutzungsschritt (D), in dem der Erfassungsmodul (20) die beobachtete Information (5) liest, an ihr eine Erfassungsverarbeitung (21) durchführt, die die Diagnosefunktion (45) enthält, und am Ausgang ein Diagnoseergebnis (25) liefert, wobei der Beobachtungsschritt (A) und der Nutzungsschritt (D) in der Verarbeitungseinheit (11) des speicherprogrammierbaren Automatisierungsgeräts (10) parallel ausgeführt werden.

10. Vorausschauendes Diagnoseverfahren nach Anspruch 9, **dadurch gekennzeichnet, dass** das Verfahren ebenfalls einen Simulationsschritt (E) aufweist, in dem der Erfassungsmodul (20) am Eingang eine vom Lernmodul (40) stammende Testprobe (6) empfängt, an dieser Testprobe (6) die Erfassungsverarbeitung (21) durchführt und am Ausgang ein Testergebnis der Diagnose (26) liefert.
